(19) Europäisches Patentamt
European Patent Office
Office européen des brevets

(11) EP 2 830 176 B1

(12) EUROPEAN PATENT SPECIFICATION

(45) Date of publication and mention
of the grant of the patent:
**22.02.2017 Bulletin 2017/08**

(51) Int Cl.:
*H02H 7/06* (2006.01)        *H02H 7/08* (2006.01)
*H02P 9/00* (2006.01)

(21) Application number: **13177933.2**

(22) Date of filing: **25.07.2013**

(54) **VARIABLE WINDOW RMS BASED PROTECTION SYSTEM AND METHOD FOR AN ELECTRICAL VARIABLE SPEED DOUBLY FED INDUCTION MACHINE**

VARIABLES FENSTER-RMS-BASIERTES SCHUTZSYSTEM UND -VERFAHREN FÜR EINE DOPPELT EINGESPEISTE INDUKTIONSMASCHINE MIT ELEKTRISCH VARIABLER DREHZAHL

SYSTÈME ET PROCÉDÉ DE PROTECTION À BASE RMS DE FENÊTRE VARIABLE POUR MACHINE À INDUCTION À DOUBLE ALIMENTATION À VITESSE VARIABLE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.01.2015 Bulletin 2015/05**

(73) Proprietor: **General Electric Technology GmbH**
**5400 Baden (CH)**

(72) Inventors:
• **Lloyd, Graeme**
**STAFFORD, ST16 3HZ (GB)**
• **Zou, Li**
**STAFFORD, ST16 1LL (GB)**
• **An, Chang**
**STAFFORD, ST16 1AN (GB)**

(74) Representative: **Ahner, Philippe**
**BREVALEX**
**95, rue d'Amsterdam**
**75378 Paris Cedex 8 (FR)**

(56) References cited:
**US-A- 5 805 395**

• **BLAKE J N ET AL: "Interfacing Optical CTs and VTs to Relays and Meters", PES TD 2005/2006 MAY 21-24, 2006, PISCATAWAY, NJ, USA,IEEE, PISCATAWAY, NJ, USA, 21 May 2006 (2006-05-21), pages 1280-1284, XP031331233, ISBN: 978-0-7803-9194-9**
• **HONGXING WANG ET AL: "Application of Electronic Transformers in Digital Substation", POWER SYSTEM TECHNOLOGY AND IEEE POWER INDIA CONFERENCE, 2008. POWERCON 2008. JOINT INTERNATIONAL CONFERENCE ON, IEEE, PISCATAWAY, NJ, USA, 12 October 2008 (2008-10-12), pages 1-5, XP031404405, ISBN: 978-1-4244-1763-6**
• **INGRAM D M E ET AL: "Test and evaluation system for multi-protocol sampled value protection schemes", 2011 IEEE TRONDHEIM POWERTECH : TRONDHEIM, NORWAY, 19 - 23 JUNE 2011, IEEE, PISCATAWAY, NJ, 19 June 2011 (2011-06-19), pages 1-7, XP032263467, DOI: 10.1109/PTC.2011.6019243 ISBN: 978-1-4244-8419-5**

**Description**

**FIELD OF THE INVENTION**

The field of the invention is that of protection of electrical variable speed doubly fed induction machines such as motors and generators. The invention more precisely relates to a protection relay to provide protection for extremely low frequency currents and voltages in the variable speed rotor and in the stator during the initial start-up and braking. The invention can also be applied to any other AC system requiring protection using RMS values.

**DESCRIPTION OF THE PRIOR ART**

Doubly fed electric machines are electric motors or electric generators that have windings on both stationary and rotating parts, where both windings transfer significant power between shaft and electrical system. The stator winding is directly connected to the three-phase grid and the three-phase rotor winding is fed from the grid through a power electronic converter.

The main difficulties when developing relays for the protection of such machines relate to the rotor protection design concerning the dynamic variation of frequency, the extremely low frequency and the effect of the converter power modulation (PWM).

At the moment there is no protection relay available in the market to provide protection for the extremely low frequency currents and voltages in the variable speed rotors (typically 0.1Hz to 6Hz in the rotor when running) and in the stator during the initial start-up and braking (0Hz to 50Hz/60Hz).

Moreover, although there is overcurrent and overvoltage protection built in to the power electronic converters connected to the rotor circuit to protect the converters, there is no dedicated protection for the machine rotor.

Indeed conventional protection relays provide mainly stator protection functions which can provide protection down to typically 5Hz. Some relays can provide protection below the normal frequency range of the standard protection functions. For example an r.m.s. overcurrent start-up protection can be used for low frequencies 2Hz to 10Hz for the stator.

It thus appears that conventional protection relays do not provide protection for very low frequencies. This is due to the fact that the Fourier methods, such as the Discrete Fourier transform (DFT) which is typically used in conventional protection relays, are not adequate to provide fast protection for the low frequency application, as the sampling rate has to be aligned to the fundamental frequency before the Fourier methods can correctly calculate the main PWM frequency component and its harmonics. These Fourier methods indeed rely on a frequency tracking technique which provides for a protection execution rate which slows down with the tracked rotor frequency (which as shown above can be as low as 0.1 Hz during normal running).

Also, conventional protection relays are normally connected to iron cored instrument transformers that are not capable of accurately measuring low frequency signals.

There is thus a need for protection relays not using DFT and frequency tracking that would be capable of achieving fast operating times and capable of connection to instrument transformers capable of measuring accurately low frequency signals, so as to guarantee the safety of the machine in all conditions.

US 5805395 A is disclosing a system for implementing accurate V/Hz value measurement and is discussing the same kind of problems.

**SUMMARY OF THE INVENTION**

In order to respond to this need, the invention provides in accordance with a first aspect a protection system for an electrical variable speed doubly fed induction machine having a stator and a rotor, comprising:

- instrument transformers capable of measuring low frequency signals from the rotor and/or the stator, in particular rotor and/or stator low frequency signals having a frequency in the range of 0.1 Hz to 6 Hz;
- a protection relay configured to receive rotor and/or stator measurement values from the instrument transformers, said rotor and/or stator measurements values being sampled at a constant sampling rate,

wherein the protection relay comprises a frequency determination module for determining the frequency of the rotor and/or stator low frequency signals, and at least one protection module configured to implement a rotor or stator protection algorithm making use of root mean square values each calculated from a series of rotor or stator sampled measurement values within a variable size rolling window which size depends upon the determined frequency of the rotor or stator low frequency signals.

## DESCRIPTION OF THE DRAWINGS

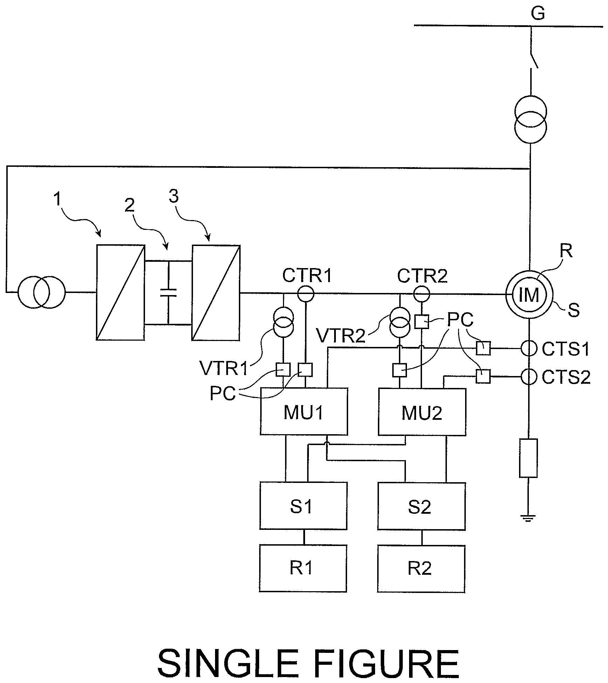

Other aspects, goals, advantages and features of the invention will appear more clearly on reading the following detailed description of preferred embodiments thereof, given by way of non-limiting example and with reference to the accompanying drawing in which figure 1 is a single line diagram showing a possible embodiment of a protection system according to the invention.

## DESCRIPTION OF PREFERRED EMBODIMENTS

With reference to figure 1, the invention relates to a protection system for an electrical variable speed doubly fed induction machine IM having a stator S and a rotor R.

The induction machine IM has windings on both the stator and the rotor. The n-phase (with n being typically three) stator winding is directly connected to a n-phase grid G and the n-phase rotor winding is fed from the grid G through a power electronic converter which conventionally comprises a grid side converter 1, a DC link 2 and a rotor side converter 3.

The protection system comprises instrument transformers capable of measuring low frequency signals from the rotor and/or stator, in particular rotor and/or stator low frequency signals in the range of 0.1 Hz to 6 Hz. Such instrument transformers, also known as non-conventional instrument transformers, such as optical and Rogowski devices, may comprise a first set of current transformers CTR1 for measuring rotor currents, a second set of current transformers CTS1 for measuring stator currents, and a first set of voltage transformers VTR1 for measuring rotor voltages. Each set comprises n transformers (with n typically equal to three), each transformer being associated to a respective phase of the rotor or stator and forming part of a respective measurement channel.

In an embodiment, the instrument transformers further comprises a second set of voltage transformers for measuring rotor voltages. AS will be described below, this second, duplicated, set of voltage transformers might be used so as to provide rotor voltage transformer supervision capability.

It will be contemplated that the protection system of figure 1 is a redundant one, in that it comprises, in addition to rotor current transformers CTR1, stator current transformers CTS1 and rotor voltage transformers VTR1, further rotor current transformers CTR2, further stator current transformers CTS2 and further rotor voltage transformers VTR2.

The protection system further comprises a protection relay R1 which is configured to receive rotor and/or stator measurement values from the instrument transformers CTR1, CTS1, VTR1 (and from the duplicated rotor voltage transformers if applicable) via respective primary converters PC and a merging unit MU1 which provides the measurements as sampled values at a constant sampling rate.

With such a constant sampling rate, and on the contrary to the frequency tracking technique, the protection execution rate does not slow down with the tracked rotor frequency which can be as low as 0.1 Hz in the rotor during normal running and in the stator during start-up and braking.

As a consequence of fixing the sampling rate, the Fourier algorithms are no longer suitable and the protection algorithms need to be redesigned. The invention provides for such new algorithms which make use of root means square values calculated from series of rotor and/or stator sampled measurement values as described in more detail below.

The protection relay R1 can be connected to the instrument transformers CTR1, CTS1, VTR1 (and the duplicated rotor voltage transformers if applicable) by means of respective primary converters PC and a merging unit MU1 which receives and samples the measurement values from the instrument transformers, the sampled measurement values being transmitted to the protection relay which may re-sample the measurement values at a constant sampling rate.

For instance, the protection relay may receive sampled measurement values from the merging unit at 80 samples/cycle (this rate being the one stipulated by the IEC61850-9-2 LE standard). With conventional instrument transformers, a conventional protection relay analogue to digital converter samples at 24/samples per cycle. Therefore, when the relay is used with non conventional instrument transformers and merging units as it is the case in the invention, the protection relay down samples the sampled measurement values at 80 samples/cycle to 24 samples/cycle to be compatible with the existing protection relay algorithms.

In an embodiment, the protection relay R1 comprises an IEC 61850 9-2 LE compliant interface module to communicate with the merging unit MU1. Allocation of the logical nodes for receiving sampled measurement values from the merging unit can be as follows: IA-1, IB-1 and IC-1 for rotor currents (current transformers CTR1), IA-2, IB-2 and IC-2 for stator currents (current transformers CTS1), VA-1, VB-1 and VC-1 for rotor voltages (voltage transformers VTR1), and if applicable VA-2, VB-2 and VC-2 for rotor voltages (voltage transformers VTR2) from a second duplicated set of voltage transformers.

In an embodiment, the protection relay R1 communicates with the merging unit MU1 via an intermediate switch S1, such as an Ethernet switch.

The redundant system of figure 1 comprises two protection relays R1, R2, each connected, via a respective switch S1, S2, to a respective set of instrument transformers (VTR1, CTR1, CTS1, for protection relay R1; VTR2, CTR2, CTS2 for protection relay R2) by means of a respective merging unit MU1, MU2. In addition, as shown on figure 1, each switch S1, S2 may be configured to receive measurement values from both merging units MU1, MU2 so that each protection relay R1, R2 can also receive voltage measurement values from the voltage transformers VTR2 and VTR1 respectively. Each relay R1, R2 therefore receives duplicated voltage measurement values that can be used to provide rotor voltage transformer supervision capability. The merging units MU1, MU2 can also be time synchronized so that the channels are on the same time base, which may be required for some protection functions that use channels from different merging units, for example, voltage transformer supervision.

The protection relay R1 comprises at least one rotor or stator protection module configured to implement a protection algorithm. A protection algorithm can make use of the rotor or stator measurement values sampled at said constant sampling rate. A protection algorithm can also make use of root mean square (RMS) values each calculated from a series of rotor or stator measurement values sampled at said constant sampling rate within a variable size window. Use of sampled values achieves fast operating times, while use of variable size window RMS values achieves better measurement accuracy.

The invention more precisely relates to RMS based protection and calculates RMS values from a series of rotor or stator measurement values, sampled at said constant rate, within a variable size rolling window which size depends upon the frequency of the rotor or stator low frequency signals.

To this purpose, the protection relay comprises a frequency determination module configured to determine the frequency of the rotor and/or stator low frequency signals, and to provide the determined rotor and/or stator frequency to at least one rotor or stator protection module.

The frequency determination module can in particular be configured to make use of sampled rotor current measurement values from logical nodes IA-1, IB-1, IC-1 for determining the rotor frequency, and of sampled stator current measurement values from logical nodes IA-2, IB-2, IC-2 for determining the rotor frequency.

The size of the variable size rolling window can be inversely proportional to said determined frequency of the rotor or stator low frequency signals. It can also be limited between a lower and an upper size. For instance, the size of the variable size rolling window is said lower size when the rotor or stator determined frequency is 70 Hz or higher, and the size of the variable size rolling window is said upper size when the rotor or stator determined frequency is 0,1 Hz or lower.

Since the calculation window of the rotor RMS quantities is full cycle of the measured rotor frequency, it is expected that the response of the RMS measurements is proportionally slower at a lower frequency than a higher frequency. Hence, according to a possible embodiment, when the rotor frequency falls below a set threshold (for instance from 0.1Hz to 2Hz), a block will be applied to all RMS based rotor protection modules.

In an embodiment, the frequency determination module is configured to filter the received rotor and/or stator sampled measurement values, so as to filter out harmonics, in particular those that may be high in the rotor.

Such filtering can be done according to different manners, depending upon the operating mode of the induction machine. For instance, measurement of the rotor frequency can use a first filter during the start-up and run down of the machine and a second filter during normal running of the machine.

Measurement of the stator frequency can use the first filter in all operating modes of the machine.

The first and second filters are preferably low pass filters, the pass band frequency of the first filter being higher than the pass band frequency of the second filter.

The first filter is used for removing high frequency noise, mainly PWM frequency (250Hz) and its harmonics. A pass band frequency of 70 Hz may be chosen. A stop band frequency (where the band attenuation is 80 dB) of 100 Hz can be chosen to sufficiently attenuate the second harmonic of the power frequency that may be present in both the stator and rotor currents during fault conditions.

The second filter is used for removing any frequency components above the maximum rotor frequency during normal running (the rotor frequency typically being between 0.1Hz to 6Hz), especially nominal system frequency of 50Hz or 60Hz which may be present in the rotor currents during some stator faults. A pass band frequency of 20 Hz may be chosen, along with a stop band frequency (where the band attenuation is 80 dB) of 50 Hz.

The frequency determination module may be configured to detect zero-crossings of the filtered rotor and/or stator sampled measurement values.

In particular, the rotor and stator frequencies can be measured by averaging the interval between two consecutive falling crossings and that between two consecutive rising crossings of the corresponding filtered rotor and stator sampled measurement values.

This measurement method can measure the frequency correctly when there is DC offset as the time interval between two rising and two falling zero crossings will be the same with or without DC offset. This method is vulnerable to noise interference (DC offset, harmonics etc.) in that it is easily corrupted by a distorted waveform. For this reason the first filter is not suitable during machine normal running. Indeed, when there is more than one frequency component below 70Hz (the pass band frequency of the first filter), there will be confusion as to which frequency to measure. For example, the rotor frequency component may be superimposed with 50 Hz component in the rotor currents during some stator faults, which may result in the measured frequency jumping between the two frequencies. This is the reason why the second filter is preferentially used during machine normal running in order to ensure that the rotor slip frequency is being measured, rather than any other frequencies that may be present during fault conditions.

In an embodiment, the frequency determination module is configured to perform channel management for the rotor and stator frequency measurement using the rotor (IA-1, IB-1, IC-1) and stator (IA-2, IB-2, IC-2) filtered and sampled currents.

To this purpose, each current measurement channel of a set is assigned a priority, for instance in the order IA, IB and IC. The frequency determination module is configured to perform the steps of:

- selecting one current channel of a set (either a set of rotor current channels or a set of stator current channels), wherein a highest priority current channel is selected if the absolute value of a channel's sampled value exceeds a preset threshold corresponding to a minimum acceptable measured magnitude threshold, otherwise a lower priority current channel is tested with respect to said preset threshold;
- measuring the frequency on the basis of current measurement values received from the selected current channel, after sampling and filtering, as long as a series of current measurement values provided by the selected current channel within half a cycle of the measured frequency has a peak value which is higher than said preset threshold; when this criteria is not met, the selection step is repeated.

The preset threshold can for instance be set to 5% of the rated current.

Amongst possible protection modules, that can be implemented alone or in combination, are modules that can use as inputs either sampled values or RMS values calculated as disclosed above. These are for instance a stator overcurrent protection module, a rotor overcurrent protection module, a rotor overvoltage protection module, or a rotor overfrequency protection module.

The rotor overcurrent protection module is configured to select a rotor current measurement channel IA-1, IB-1 or IC-1 for receiving rotor current measurement values, and to implement a rotor overcurrent protection algorithm that uses RMS values each calculated from a series of rotor current measurement values, sampled at the constant rate, within a rolling window, size of which depends upon the rotor frequency.

In the same manner, the stator overcurrent protection module is configured to select a stator current measurement channel IA-2, IB-2 or IC-2 for receiving stator current measurement values, and to implement a stator overcurrent protection algorithm that uses RMS values each calculated from a series of stator current measurement values, sampled at the constant rate, within a rolling window, size of which depends upon the stator frequency.

The rotor overvoltage protection module is configured to receive rotor voltage measurement values from the three measurement channels VA-1, VB-1 and VC-1, and to implement a rotor voltage protection algorithm that uses RMS values each calculated from a series of rotor voltage measurement values, sampled at the constant rate, within a rolling window, size of which depends upon the rotor frequency.

Amongst other possible protection modules, that can be implemented alone or in combination, are modules that use RMS values as inputs. These are for instance a stator negative phase sequence overcurrent protection module, or a rotor neutral voltage displacement overvoltage protection module. Each of these modules is configured to calculate derived measurement values from received measurement values and to implement a protection algorithm making use of root mean square values each corresponding to the root mean square values of a series of said derived measurement values with a said variable size rolling window.

More precisely, the stator NPS (Negative Phase Sequence) overcurrent protection module is configured to receive stator current measurement values from the stator current measurement channels IA-2, IB-2 and IC-2, to derive stator NPS current values from the stator current measurement values sampled at the constant rate which involves shifting the samples from channels IB-2 and IC-2 according to the measured stator frequency, and to implement a stator NPS overcurrent protection algorithm that uses RMS values each calculated from a series of derived stator NPS current values within a rolling window size of which depends upon the stator frequency.

The negative phase sequence current phasor can be calculated by Equation 1.

$$\boxed{3 \cdot \dot{I}_2 = \dot{I}_a + a^2 \cdot \dot{I}_b + a \cdot \dot{I}_c}$$

Equation 1

Where the multiple factor $a = e^{j \cdot 120°}$.

Assuming the sampling rate is $N$ samples/cycle, thus shifting by $\frac{1}{3}$. $N$ points is equal to shifting the phase angle by 120°. Equation 2 is the sample value equivalent to Equation 1:

$$3 \cdot \dot{I}_2(k) = \dot{I}_a(k) + \dot{I}_b(k + \frac{2}{3} \cdot N) + \dot{I}_c(k + \frac{1}{3} \cdot N)$$

Equation 2

Equation 2 can be expressed in terms of the following Equation 3, where $\delta$ is any angle and n is the number of samples equivalent to $\delta$.

$$3 \cdot \dot{I}_2(k) = \dot{I}_a(k) - \left( 0.5 + \frac{\sin(60°)}{\sin(\delta)} \cdot \cos(\delta) \right) \cdot \dot{I}_b(k) + \frac{\sin(60°)}{\sin(\delta)} \cdot \dot{I}_b(k-n)$$
$$- \left( 0.5 - \frac{\sin(60°)}{\sin(\delta)} \cdot \cos(\delta) \right) \cdot \dot{I}_c(k) - \frac{\sin(60°)}{\sin(\delta)} \cdot \dot{I}_c(k-n)$$

Equation 3

The smaller the $\delta$, the larger the calculation error when the waveform is not purely sinusoidal and balanced but the faster the calculation.

The rotor NVD (Neutral Voltage Displacement) overvoltage protection is configured to receive rotor voltage measurement values from the rotor voltage measurement channels VA-1, VB-1 and VC-1, to derive a rotor NVD voltage value from the rotor voltage measurement values sampled at the constant rate which involves summating the samples from the sources VA-1, VB-1 and VC-1, and to implement a rotor NVD overvoltage protection algorithm that uses RMS values each calculated from a series of derived rotor NVD voltage values within a rolling window size of which depends upon the rotor frequency.

In an embodiment, the protection relay can comprise a rotor overfrequency protection module configured to implement a rotor overfrequency algorithm that uses the rotor frequency determined by the frequency determination module as indicated above.

In an embodiment, the protection relay comprises a stator current transformer supervision module configured to block the stator NPS overcurrent protection module in case of failure of a current transformer associated to the stator. This stator current transformer supervision module operates by detecting the presence of residual current in the absence of residual voltage. The residual current is derived from the sampled values of the three phase stator currents IA-2, IB-2, IC-2 and the stator current transformer supervision uses the RMS value of such sampled values within a said rolling window. As the protection relay may not be directly connected to measuring means of the stator voltages, it is not possible to get direct information as to the residual voltage. In such case, knowledge of the residual voltage may come from an external source, such as a conventional stator protection relay using conventional instrument transformers.

In an embodiment the protection relay receives measurement values from two redundant sets of rotor voltage transformers VTR1, VTR2, and comprises a rotor voltage transformer supervision module configured to block the rotor neutral voltage protection module in case of failure of a voltage transformer associated to the rotor. This rotor voltage transformer supervision module implements a balance voltage method according to which the difference between the voltages from the two set of voltage transformers is used to indicate a failure of one of the voltage transformers.

The rotor voltage transformer supervision module receives voltage measurement values from the two sets of voltage transformers VTR1, VTR2 (from inputs VA-1, VB-1, VC-1 and VA-2, VB-2, VC-2), and calculates the difference between the RMS values, determined in accordance with the invention from sampled voltage measurement values within a rolling window size of which depends on the rotor frequency, of the two voltages.

These protection modules ensure protection for frequencies in the range of 0.1 to 70Hz, during the induction machine IM start-up, braking and normal running.

It shall be noted that the RMS values used by the protection modules are calculated from the raw samples of the measurement values, without being filtered in particular by the first or second filters used by the frequency determination module.

In an embodiment, as any degradation in the measurement or transmission of measurement values may result in the protection modules of the protection relay not operating correctly, a quality flag is associated with each sampled measurement value so that questionable data may be detected and the protection relay may adapt the behavior of the protection modules according to the quality flags.

As for the IEC 61850-9-2 LE protocol, a quality flag may have three states "Good", "Invalid" or "Questionable". For protection modules to work correctly, all the necessary sampled values should have Good quality. Samples that have an Invalid or Questionable quality could result in unacceptable performance from the protection modules. Hence reception of an Invalid or Questionable flag may result in freezing and/or in inhibiting a protection module.

The way that the protection relay treats questionable data is user configurable. However, the default setting can be changed to "Trust Questionable Data".

It shall be noted that IEC 61850-9-2 LE quality flags will not be able to determine if there is loss of 1 or 3 phase current signals due to a current transformer fault or when the machine is out of service so current transformer supervision is required in addition to the quality flags for the supervision of the stator negative phase sequence overcurrent protection.

As shown above, the rotor voltage transformer supervision is based on a voltage balance method. It shall be noted that IEC 61850-9-2 LE quality flags will not be able to determine if there is loss of 1 or 3 phase voltage signals due to a voltage transformer fault or when the machine is out of service or if there is a single phase fault for example. Rotor voltage transformer supervision is therefore required in addition to the quality flags for the supervision of the rotor neutral voltage protection.

The protection system described above has the following advantages.

Both rotor and stator of a variable speed doubly fed induction motors and generators are protected from damaging rotor and stator faults such as overcurrents and overvoltages caused by phase and earth faults and excessive slip frequencies during normal running, the start-up and braking in both motor and generator modes.

Maximum protection availability is achieved with redundant non conventional instrument transformers (NCITs), primary converters, merging units and protection relays.

Use of NCITs has particular benefits for generator applications. Conventional generator current transformers (CTs) can physically be very large whereas NCITs are much smaller and can measure very large currents more accurately. Also, the X/R ratio of generator fault currents can be very high causing saturation with conventional CTs whereas NCITs do not suffer from saturation and so provide a more accurate linear output.

An open standard (IEC61850 9-2 LE) can be used to interface the protection relay with the merging units and the NCITs making integration of different vendors products easier.

Communications between the merging unit and the protection relay can use Ethernet fiber optic communications instead of copper wiring used with conventional CT wiring. Security is enhanced by the use of fiber optic Ethernet connections for any links which run outside of a single local cabinet, such that there are no long, cross-site runs of copper-based communications. This eliminates the risk of induced interference, thereby boosting both security and dependability.

Accurate RMS protection is provided for low frequencies or nominal frequencies using variable sized rolling window and fixed sampling rate.

Accurate RMS measurements over a wide frequency range are ensured thanks to the two low pass filtering characteristics which provide insensitivity to harmonics.

Protection is available from very low frequency (0.1Hz) to nominal frequencies (50Hz or 60Hz) because the window size is based on the measured frequency.

The protection execution rate is fixed and not dependent on the frequency as in standard Fourier based on relays which use frequency tracking.

The invention is not limited to the above-described protection system, but also extends to a method implemented by such a protection system, and in particular to a method for protecting an electrical variable speed doubly fed induction machine having a stator and a rotor, comprising, at a protection relay, the steps of:

- receiving rotor and/or stator measurement values from instrument transformers capable of measuring low frequency signals from the rotor and/or the stator, in particular rotor and/or stator low frequency signals in the range of 0.1 Hz to 6 Hz, said rotor and/or stator measurements values being sampled at a constant sampling rate;
- determining the frequency of the rotor and/or stator low frequency signals;
- implementing at least one rotor or stator protection algorithm making use of root mean square values each calculated from a series of rotor or stator sampled measurement values within a variable size rolling window size of which depends upon the determined frequency of the rotor or stator low frequency signals.

In an embodiment, when the rotor frequency falls below a set threshold (for instance from 0.1Hz to 2Hz), a block is applied to all RMS based rotor protection modules.

## Claims

1. A protection system for an electrical variable speed doubly fed induction machine (IM) having a stator (S) and a rotor (R), comprising:

   - instrument transformers (CTR1, CTR2, CTS1, CTS2, VTR1, VTR2) capable of measuring low frequency signals from the rotor and/or the stator, in particular rotor and/or stator low frequency signals having a frequency in the range of 0.1 Hz to 6 Hz;
- a protection relay (R1, R2) configured to receive rotor and/or stator measurement values from the instrument transformers, said rotor and/or stator measurements values being sampled at a constant sampling rate,

wherein the protection relay comprises a frequency determination module for determining the frequency of the rotor and/or stator low frequency signals, and at least one protection module configured to implement a rotor or stator protection algorithm making use of root mean square values each calculated from a series of said rotor or stator sampled measurement values within a variable size rolling window which size depends upon the determined frequency of the rotor or stator low frequency signals.

2. The protection system of claim 1, wherein the size of the variable size rolling window is inversely proportional to said determined frequency of the rotor or stator low frequency signals, and limited between a lower and an upper size.

3. The protection system of any one of claims 1-2, wherein the frequency determination module is configured to filter the sampled rotor measurement values with a first filter during the start-up and run down of said machine and with a second filter during normal running of the machine.

4. The protection system of claim 3, wherein the frequency determination module is configured to filter the sampled stator measurement values with said first filter during start-up, run down and normal running of the machine.

5. The protection system of any one of claims 3-4, wherein the first and second filters are low pass filters, the pass band frequency of the first filter being higher than the pass band frequency of the second filter.

6. The protection system of any one of claims 3-5, wherein the frequency determination module is configured to detect zero-crossings of the filtered rotor and/or stator measurement values.

7. The protection system of any one of claims 1-6, wherein the instrument transformers comprise a first set of current transformers (CTR1, CTR2) for measuring rotor currents, a second set of current transformers (CTS1, CTS2) for measuring stator currents, and at least one set of voltage transformers (VTR1, VTR2) for measuring rotor voltages, each transformer forming part of a measurement channel.

8. The protection system of claim 7, wherein each current measurement channel associated to a current transformer of a set is assigned a priority and wherein the frequency determination module is configured to perform the steps of:

- selecting one current measurement channel of the first set of current transformers and/or one current measurement channel of the second set of current transformers, wherein a higher priority current measurement channel is selected if a sampled value of said measurement channel exceeds a preset threshold;
- measuring the frequency of the rotor and/or stator low frequency signals on the basis of current measurement values received from the selected current measurement channel of the first set and/or from the selected current measurement channel of the second set, as long as a series of current measurement values provided by a selected current measurement channel within half a cycle of the measured frequency has a peak value which is higher than said preset threshold.

9. The protection system of any one of claims 1-8, wherein said at least one protection module comprises a stator overcurrent protection module and/or a rotor overcurrent protection module and/or a rotor overvoltage protection module.

10. The protection system of any one of claims 1-9, wherein said at least one protection module comprises a stator negative phase sequence overcurrent protection module and/or a rotor neutral voltage displacement overvoltage protection module, each configured to calculate derived measurement values from received measurement values and to implement a protection algorithm making use of root mean square values each corresponding to the root mean square value of a series of said derived measurement values within a said variable size rolling window.

11. The protection system of claim 10, wherein the protection relay further comprises a stator current transformer supervision module configured to derive residual current measurement values from received stator current measurement values, to implement a protection algorithm making use of root mean square values each corresponding to the root mean square value of a series of said derived residual current measurement values within a said variable size rolling window, and to block the stator negative phase sequence overcurrent protection module in case of detecting the presence of residual current in the absence of residual voltage.

12. The protection system of claim 10, wherein the protection relay comprises a voltage transformer supervision module configured to calculate the difference between two root mean square values each calculated from a series of rotor voltage measurement values within a said variable size rolling window, and to block the rotor neutral voltage displacement protection module in case of failure of a voltage transformer associated to the rotor.

13. The protection relay of any one of claims 1-12, wherein the protection relay further comprises a rotor overfrequency protection module configured to use said determined frequency of the rotor low frequency signals.

14. The protection system of any one of claims 1-13, wherein the protection relay (R1, R2) is connected to the instrument transformers by means of primary converters (PC) and of a merging unit (MU1, MU2), and wherein the protection relay further comprises an IEC 61850-9-2 LE compliant interface module to communicate with the merging unit.

15. A method for protecting an electrical variable speed doubly fed induction machine (IM) having a stator (S) and a rotor (R), comprising, at a protection relay (R1, R2), the steps of:

- receiving rotor and/or stator measurement values from instrument transformers (CTR1, CTR2, CTS1, CTS2, VTR1, VTR2) capable of measuring low frequency signals from the rotor and/or the stator, in particular rotor and/or stator low frequency signals in the range of 0.1 Hz to 6 Hz, said rotor and/or stator measurements values being sampled at a constant sampling rate;
- determining the frequency of the rotor and/or stator low frequency signals;
- implementing at least one rotor or stator protection algorithm making use of root mean square values each calculated from a series of said rotor or stator sampled measurement values within a variable size rolling window size of which depends upon the determined frequency of the rotor or stator low frequency signals.

**Patentansprüche**

1. Schutzsystem für eine doppelt eingespeiste Induktionsmaschine (IM) mit elektrisch variabler Drehzahl, die einen Stator (S) und einen Rotor (R) aufweist, umfassend
Meßwandler (CTR1, CTR2, CTS1, CTS2, VTR1, VTR2), die in der Lage sind, niederfrequente Signale von dem Rotor und / oder dem Stator, insbesondere niederfrequente Rotor- und / oder Statorsignale zu messen, die eine Frequenz im Bereich von 0,1 Hz bis 6 Hz aufweisen;
ferner umfassend ein Schutzrelais (R1, R2), das so gebaut ist, daß es Rotor- und / oder Statormeßwerte von den Meßwandlern empfängt, und daß diese Rotor- und / oder Statormeßwerte mit einer konstanten Prüfrate geprüft werden,
wobei das Schutzrelais einen Frequenzbestimmungsmodul zur Bestimmung der Frequenz der Rotor- und / oder Stator-Niederfrequenzsignale aufweist, sowie wenigstens einen Schutzmodul, der dazu dient, einen Rotor- oder Stator-Schutzalgorithmus zu implementieren, und zwar unter Verwendung von quadratischen Mittelwerten, von denen jeder aus einer Reihe der Rotor- oder Stator-Prüfmeßwerte in einem Rollfenster variabler Größe berechnet ist, wobei die Größe von der bestimmten Frequenz der Rotor- oder Stator-Niederfrequenzsignale abhängt.

2. Schutzsystem nach Anspruch 1, **dadurch gekennzeichnet, daß** die Größe des Rollfensters variabler Größe umgekehrt proportional der bestimmten Frequenz der Rotor- oder Stator-Niederfrequenzsignale ist und zwischen einer unteren und einer oberen Größe begrenzt ist.

3. Schutzsystem nach einem der Ansprüche 1 bis 2, **dadurch gekennzeichnet, daß** der Frequenzbestimmungsmodul so gebaut ist, daß die geprüften Rotormeßwerte mit einem ersten Filter während der Inbetriebnahme und des Herunterfahrens der Maschine geprüft werden können sowie mit einem Filter während des normalen Laufs der Maschine.

4. Schutzsystem nach Anspruch 3, **dadurch gekennzeichnet, daß** der Frequenzbestimmungsmodul so gebaut ist, daß die geprüften Statormeßwerte mit dem ersten Filter während der Inbetriebnahme, des Herunterfallens und des normalen Betriebs der Maschine gefiltert werden können.

5. Schutzsystem nach einem der Ansprüche 3 bis 4, **dadurch gekennzeichnet, daß** die ersten und zweiten Filter Tiefpaßfilter sind, und daß die Durchlaß-Bandfrequenz des ersten Filters höher ist als die Durchlaß-Bandfrequenz des zweiten Filters.

6. Schutzsystem nach einem der Ansprüche 3 bis 5, **dadurch gekennzeichnet, daß** der Frequenzbestimmungsmodul so gebaut ist, daß er null Durchgänge der gefilterten Rotor- und / oder Statormeßwerte erstellt.

7. Schutzsystem nach einem der Ansprüche 1 bis 6, **dadurch gekennzeichnet, daß** die Meßwertumformer einen ersten Satz von Stromwandlern (CTR1, CTR2) zur Messung von Rotorströmen aufweisen, sowie einen zweiten Satz von Stromwandlern (CTS1, CTS2) zur Messung von Statorströmen, und wenigstens einen Satz Spannungswandler (VTR1, VTR2) zur Messung von Rotorspannungen, wobei jeder Wandler Teil eines Meßkanals bildet.

8. Schutzsystem zur nach Anspruch 7, **dadurch gekennzeichnet, daß** jedem Stromwandler eines Satzes, der zu einem Meßkanal gehört, eine Priorität zugeordnet ist, und daß der Frequenzbestimmungsmodul so gebaut ist, daß er die folgenden Schritte ausführt:

   Auswählen eines Strommeßkanals des ersten Satzes der Stromwandler und / oder eines Strommeßkanals des zweiten Satzes der Stromwandler, wobei ein Strommeßkanal höherer Priorität ausgewählt wird, wenn ein geprüfter Wert des Meßkanals einen vorgegebenen Schwellenwert übersteigt;
   Messen der Frequenz der Rotor- und / oder Statornieder-Frequenzsignale auf der Basis der Strommeßwerte, die von dem ausgewählten Strommeßkanal des ersten Satzes und / oder von dem ausgewählten Strommeßkanal des zweiten Satzes erhalten werden, solange eine Reihe von Strommeßwerten, die durch einen ausgewählten Strommeßkanal innerhalb eines halben Zyklus der gemessenen Frequenz geboten werden, einen Spitzenwert hat, der höher ist als der vorgegebene Schwellenwert.

9. Schutzsystem nach einem der Ansprüche 1 bis 8, **dadurch gekennzeichnet, daß** wenigstens ein Schutzmodul einen Überstromschutzmodul und / oder einen Rotor-Überstromschutzmodul und / oder einen Rotor-Überspannungs-Schutzmodul bildet.

10. Schutzsystem nach einem der Ansprüche 1 bis 9, **dadurch gekennzeichnet, daß** wenigstens ein Schutzmodul einen Stator-Überstrom-Schutzmodul negativer Phasenfolge und / oder einen Rotor-Überspannungs-Schutzmodul neutraler Spannungsverschiebung aufweist, die jeder so gebaut sind, daß von den erhaltenen Meßwerten abgeleitete Meßwerte errechnet werden und daß ein Schutzalgorithmus implementiert wird, und zwar unter Verwendung von quadratischen Mittelwerten, von denen jeder dem quadratischen Mittelwert einer Reihe von abgeleiteten Meßwerten entspricht, und zwar innerhalb einer variablen Rollfenstergröße.

11. Schutzsystem nach Anspruch 10, **dadurch gekennzeichnet, daß** das Schutzrelais des weiteren einen Stator-Stromwandler-Überwachungsmodul aufweist, der so gebaut ist, daß er von den empfangenen Stator-Strommeßwerten Reststrom-Meßwerte herleitet, um dadurch einen Schutzalgorithmus zu implementieren, der von Quadratwurzel-Mittelwerten Gebrauch macht, von denen jeder dem Quadratwurzel-Mittelwert einer Reihe von abgeleiteten Reststrom-Meßwerten entspricht, und zwar innerhalb eines Rollenfensters variabler Größe, um dadurch den Stator-Überstrom-Schutzmodul negativer Phasenfolge für den Fall zu blockieren, daß in Abwesenheit von Restspannung das Vorhandensein von Reststrom festgestellt wird.

12. Schutzsystem nach Anspruch 10, **dadurch gekennzeichnet, daß** das Schutzrelais einen Spannungswandler-Überwachungsmodul aufweist, der so gebaut ist, daß die Differenz zwischen zwei quadratischen Mittelwerten berechnet wird, von denen jeder von einer Reihe Rotorspannungs-Meßwerten in einem besagten Rollfenster variabler Größe berechnet wird, und wobei für den Fall des Versagens eines dem Rotor zugeordneten Spannungswandlers der neutrale Spannungsverschiebungs-Schutzmodul des Rotors blockiert wird.

13. Schutzsystem nach einem der Ansprüche 1 bis 12, **dadurch gekennzeichnet, daß** das Schutzrelais des weiteren einen Rotor-Überfrequenz-Schutzmodul aufweist, der so gebaut ist, daß er die bestimmte Frequenz der Rotor-Niederfrequenzsignale benutzt.

14. Schutzsystem nach einem der Ansprüche 1 bis 13, **dadurch gekennzeichnet, daß** das Schutzrelais (R1, R2) mit den Meßwandlern mit Hilfe von Primärwandlern (PC) und einer Verschmelzungseinheit (MU1, MU2) verbunden ist, und daß das Schutzrelais ferner einen IEC 61 850 - 9 - 2 LE konformen Schnittstellenmodul aufweist, um mit der Verschmelzungseinheit zu kommunizieren.

15. Verfahren zum Schutze einer doppelt eingespeisten Induktionsmaschine (IM) mit elektrisch variabler Drehzahl, die einen Stator (S) und einen Rotor (R) aufweist und mit einem Schutzrelais (R1, R2) versehen ist, **gekennzeichnet durch** die folgenden Schritte:

Empfangen von Rotor- und / oder Statormeßwerten von Meßwertwandlern (CTR1, CTR2, CTS1, CTS2, VTR1, VTR2), die in der Lage sind, niederfrequente Signale von dem Rotor und / oder dem Stator zu messen, insbesondere niederfrequente Signale von dem Rotor und / oder Stator im Bereich von 0,1 Hz bis 6 Hz, wobei die Rotor- und / oder Statormeßwerte mit einer konstanten Prüfrate geprüft werden;
Bestimmen der Frequenz der niederfrequenten Signale des Rotors und / oder Stators;
Implementieren wenigstens eines Rotor- oder Statorschutzalgorithmus unter Verwendung von quadratischen Mittelwerten, von denen jeder aus einer Reihe geprüfter Rotor- oder Statormeßwerte stammt und die eine variable Rollfenstergröße aufweisen, welche von der bestimmten Frequenz der niederfrequenten Rotor- oder Statorsignale abhängt.

## Revendications

1. Système de protection pour une machine à induction (IM) à double alimentation et vitesse variable ayant un stator (S) et un rotor (R), comprenant :

   - des transformateurs de mesure (CTR1, CTR2, CTS1, CTS2, VTR1, VTR2) capables de mesurer des signaux basse fréquence provenant du rotor et/ou du stator, en particulier des signaux basse fréquence de rotor et/ou de stator ayant une fréquence dans la plage de 0,1 Hz à 6 Hz ;
   - un relais de protection (R1, R2) configuré pour recevoir des valeurs de mesure de rotor et/ou de stator en provenance des transformateurs de mesure, lesdites valeurs de mesure de rotor et/ou de stator étant échantillonnées à une cadence d'échantillonnage constante,

   dans lequel le relais de protection comprend un module de détermination de fréquence pour déterminer la fréquence des signaux basse fréquence de rotor et/ou de stator, et au moins un module de protection configuré pour implémenter un algorithme de protection de rotor ou de stator employant des valeurs quadratiques moyennes calculées chacune à partir d'une série desdites valeurs de mesure échantillonnées de rotor ou de stator dans une fenêtre glissante de taille variable dont la taille dépend de la fréquence déterminée des signaux basse fréquence de rotor ou de stator.

2. Système de protection selon la revendication 1, dans lequel la taille de la fenêtre glissante de taille variable est inversement proportionnelle à ladite fréquence déterminée des signaux basse fréquence de rotor ou de stator, et limitée entre une taille inférieure et une taille supérieure.

3. Système de protection selon l'une quelconque des revendications 1 à 2, dans lequel le module de détermination de fréquence est configuré pour filtrer les valeurs de mesure de rotor échantillonnées avec un premier filtre pendant les démarrage et décélération de ladite machine et avec un second filtre pendant un fonctionnement normal de la machine.

4. Système de protection selon la revendication 3, dans lequel le module de détermination de fréquence est configuré pour filtrer les valeurs de mesure de stator échantillonnées avec ledit premier filtre pendant les démarrage, décélération et fonctionnement normal de la machine.

5. Système de protection selon l'une quelconque des revendications 3 à 4, dans lequel les premier et second filtres sont des filtres passe-bas, la fréquence passe-bande du premier filtre étant plus élevée que la fréquence passe-bande du second filtre.

6. Système de protection selon l'une quelconque des revendications 3 à 5, dans lequel le module de détermination de fréquence est configuré pour détecter des passages par zéro des valeurs de mesure de rotor et/ou de stator filtrées.

7. Système de protection selon l'une quelconque des revendications 1 à 6, dans lequel les transformateurs de mesure comprennent un premier ensemble de transformateurs de courant (CTR1, CTR2) pour mesurer des courants de rotor, un second ensemble de transformateurs de courant (CTS1, CTS2) pour mesurer des courants de stator, et au moins un ensemble de transformateurs de tension (VTR1, VTR2) pour mesurer des tensions de rotor, chaque transformateur faisant partie d'un canal de mesure.

8. Système de protection selon la revendication 7, dans lequel chaque canal de mesure de courant associé à un transformateur de courant d'un ensemble se voit attribuer une priorité et dans lequel le module de détermination de fréquence est configuré pour réaliser les étapes de :

- sélection d'un canal de mesure de courant du premier ensemble de transformateurs de courant et/ou d'un canal de mesure de courant du second ensemble de transformateurs de courant, dans lequel un canal de mesure de courant de priorité plus élevée est sélectionné si une valeur échantillonnée dudit canal de mesure dépasse un seuil préétabli ;
- mesure de la fréquence des signaux basse fréquence de rotor et/ou de stator sur la base de valeurs de mesure de courant reçues en provenance du canal de mesure de courant sélectionné du premier ensemble et/ou en provenance du canal de mesure de courant sélectionné du second ensemble, tant qu'une série de valeurs de mesure de courant fournies par un canal de mesure de courant sélectionné dans un demi-cycle de la fréquence mesurée a une valeur de crête qui est plus élevée que ledit seuil préétabli.

9. Système de protection selon l'une quelconque des revendications 1 à 8, dans lequel ledit au moins un module de protection comprend un module de protection contre les surintensités de stator et/ou un module de protection contre les surintensités de rotor et/ou un module de protection contre les surtensions de rotor.

10. Système de protection selon l'une quelconque des revendications 1 à 9, dans lequel ledit au moins un module de protection comprend un module de protection contre les surintensités de séquence de phases négatives de stator et/ou un module de protection contre les surtensions de déplacement de tension neutre de rotor, chacun étant configuré pour calculer des valeurs de mesure dérivées à partir de valeurs de mesure reçues et pour implémenter un algorithme de protection employant des valeurs quadratiques moyennes correspondant chacune à la valeur quadratique moyenne d'une série desdites valeurs de mesure dérivées dans une dite fenêtre glissante de taille variable.

11. Système de protection selon la revendication 10, dans lequel le relais de protection comprend en outre un module de supervision de transformateur de courant de stator configuré pour dériver des valeurs de mesure de courant résiduel à partir de valeurs de mesure de courant de stator reçues, pour implémenter un algorithme de protection employant des valeurs quadratiques moyennes correspondant chacune à la valeur quadratique moyenne d'une série desdites valeurs de mesure de courant résiduel dérivées dans une dite fenêtre glissante de taille variable, et pour bloquer le module de protection contre les surintensités de séquence de phases négatives de stator en cas de détection de présence de courant résiduel en l'absence de tension résiduelle.

12. Système de protection selon la revendication 10, dans lequel le relais de protection comprend un module de supervision de transformateur de tension configuré pour calculer la différence entre deux valeurs quadratiques moyennes calculées chacune à partir d'une série de valeurs de mesure de tension de rotor dans une dite fenêtre glissante de taille variable, et pour bloquer le module de protection de déplacement de tension neutre de rotor en cas de défaillance d'un transformateur de tension associé au rotor.

13. Relais de protection selon l'une quelconque des revendications 1 à 12, dans lequel le relais de protection comprend en outre un module de protection contre les surfréquences de rotor configuré pour utiliser ladite fréquence déterminée des signaux basse fréquence de rotor.

14. Système de protection selon l'une quelconque des revendications 1 à 13, dans lequel le relais de protection (R1, R2) est connecté aux transformateurs de mesure au moyen de convertisseurs primaires (PC) et d'une unité de fusion (MU1, MU2), et dans lequel le relais de protection comprend en outre un module d'interface conforme à la norme IEC 61850-9-2 LE pour communiquer avec l'unité de fusion.

15. Procédé de protection d'une machine à induction (IM) à double alimentation et vitesse variable ayant un stator (S) et un rotor (R), comprenant, au niveau d'un relais de protection (R1, R2), les étapes de :

- réception de valeurs de mesure de rotor et/ou de stator en provenance de transformateurs de mesure (CTR1, CTR2, CTS1, CTS2, VTR1, VTR2) capables de mesurer des signaux basse fréquence provenant du rotor et/ou du stator, en particulier des signaux basse fréquence de rotor et/ou de stator dans la plage de 0,1 Hz à 6 Hz, lesdites valeurs de mesure de rotor et/ou de stator étant échantillonnées à une cadence d'échantillonnage constante ;
- détermination de la fréquence des signaux basse fréquence de rotor et/ou de stator ;

- implémentation d'au moins un algorithme de protection de rotor ou de stator employant des valeurs quadratiques moyennes calculées chacune à partir d'une série desdites valeurs de mesure échantillonnées de rotor ou de stator dans une fenêtre glissante de taille variable dont la taille dépend de la fréquence déterminée des signaux basse fréquence de rotor ou de stator.

SINGLE FIGURE

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5805395 A